(19) Europäisches Patentamt European Patent Office Office européen des brevets

(11) **EP 3 979 166 B1**

(12) **EUROPEAN PATENT SPECIFICATION**

(45) Date of publication and mention
of the grant of the patent:
**15.01.2025 Bulletin 2025/03**

(51) International Patent Classification (IPC):
***G06Q 10/08*** *(2024.01)*

(52) Cooperative Patent Classification (CPC):
**G06Q 10/0833**

(21) Application number: **20199860.6**

(22) Date of filing: **02.10.2020**

(54) **METHOD AND SYSTEM FOR AUTOMATICALLY DISTRIBUTING ASSET POOL SHARES AMONG ACTORS IN A BLOCKCHAIN NETWORK**

VERFAHREN UND SYSTEM ZUR AUTOMATISCHEN VERTEILUNG VON ASSET-POOL-ANTEILEN UNTER AKTEUREN IN EINEM BLOCKCHAIN-NETZWERK

PROCÉDÉ ET SYSTÈME DE DISTRIBUTION AUTOMATIQUE D'ACTIONS DE GROUPE ACTIFS PARMI LES ACTEURS D'UN RÉSEAU DE CHAÎNE DE BLOCS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.04.2022 Bulletin 2022/14**

(73) Proprietor: **Siemens Aktiengesellschaft
80333 München (DE)**

(72) Inventors:
• **ORCHARD, Alastair
16146 Genova (GE) (IT)**
• **GUERRASIO, Corradino
16167 Genova (GE) (IT)**

(74) Representative: **Siemens Patent Attorneys
Postfach 22 16 34
80506 München (DE)**

(56) References cited:
**EP-A1- 3 564 881**

## Description

The invention relates to a method and a system for automatically distributing asset pool shares among actors in a blockchain network according to the preamble of claims 1 and 5 respectively.

Blockchains are most often used to record transactions between parties according to a smart contract.

In industrial use cases, the transactions which are recorded in a blockchain typically refer to the supply of material or to the provision of services, e.g. acquiring raw materials, transforming them into finished goods, and distributing the products to the customers.

In supply chain management systems, blockchain technologies are used for tracking and tracing of products and items in an automatic, fast and secure manner.

Examples of tracked and traced items include but are not limited by final products, raw materials, ingredients, order operations, manufacturing operations, packaging operations, logistics operations, shipping operations, transportation operations and any other relevant product lifecycle operation.

The distributed and secure nature of the blockchain lends itself extremely well to the traceability of products across multiple stakeholders e.g. from farm to fork.

Therefore, tracking solutions based on blockchain technologies are widely deployed by many of the largest international manufacturing, retailing and logistics companies.

Assume an exemplary industrial use case of a product value chain comprising three different types of actors, e.g. a product brand owner, a farmer company and a logistics provider respectively called actor A, actor B and actor C.

Typically, actor A holds information on processing and packaging of goods, actor B holds information on food growing and actor C hold information on product or material shipping.

Assume actor A is interested to arrange these three different types of actors in a track and trace network based on blockchain technology.

When a blockchain technology is applied for lifecycle traceability purposes, it is mandatory that each actor in the product value chain participates to the product traceability, otherwise the chain might be broken with a traceability loss.

In the art, it is known that in such blockchain systems there are asymmetric contributions and gains as regards the values of exchanged resources between the different types of actors; for example, ranging between net benefactors (e.g. actor A types), through neutral users (e.g. actor C types), to net contributors (e.g. actor B types).

In fact, the skilled person are well aware that participation to supply chain blockchain networks imply, for the involved actors, the usage of several means, for example for hardware hosting, for running a blockchain node, for writing network transactions, for participating to the network, for collecting sensor data etc. On the other hand, one or more actors, like e.g. the brand owners, benefit from the participation of the other actors to the network, like e.g. the farmer companies and the logistics providers.

As used herein the terms "network resource" denotes resource/means allocation for the actors participating to the blockchain network. Examples of network resources include, but are not limited by resource requirements for network participation in terms of hardware, software, time, personnel, data exchange means, data collection means, etc.

During a chosen time interval (e.g. each day, week, month or year), each actor may experience differing levels of benefits as a result of using the network for a unit allocation of network resources. Some actors may enjoy a net gain, others may break even, and a few who may be essential to the proper functioning of the network may suffer persistent losses.

In an exemplary use case, the brand owner may experience 30% of the total benefits generated by the network (e.g. also by performing a complex recall of products from the market), for allocating only 10% of the total network resources. The farmer may allocate 25% of the total resources (e.g. by registering the harvest transactions) without receiving any of the benefits. This asymmetry in the relative effort versus the reward between actors is not stable - with each time interval creating new asymmetries among network actors.

Current blockchain techniques for track and track do not enable assets to be automatically and efficiently distributed among network actors in order to rebalance asymmetries of actor contributions and gains.

As used herein the term "assets" denote items having a certain recognized value which can be exchanged among actors. Examples of assets may include, but not be limited by, tokens, currencies digital or real, coins, vouchers, any item of recognized value which can be swapped between actors.

Denoted as "service provider" is the party which is typically managing the blockchain network and which is responsible for establishing the consortium and for operating the blockchain service.

In the art, service providers may often find themselves brokering the agreements among all the network actors, and potentially handling the redistribution of assets e.g. via service fees.

With a large number of actors, e.g. measured in tens, hundreds or thousands, sometimes even in different countries, a huge volume of network transactions, e.g. measured in millions or billions, and a dynamically shifting symmetry, the overhead for the service providers of such brokerage efforts outweighs the value of theirs provided services and therefore could, for example, exceed the billing fees that the net benefactors are then willing to pay.

Even in the use case where the service provider and the net benefactor are the same party, it is still desirable to find an efficient technique to enable the net benefactors for automatically compensating the net contributors for their contributions to the network.

Current asset distribution techniques among actors of a blockchain network for track and trace of supply chain operations are a mixed of automatic and manual operations and are cumbersome, tedious, error-prone and otherwise ill-suited for the task.

EP 3564 881 (A1) describes an industrial automation system to store, manage, and distribute manufacturing and supply chain data.

It is therefore the aim of the present invention to overcome the above mentioned drawbacks, in particular by providing a method and system for distributing asset pool shares among actors in a blockchain network in an automatic and balanced manner.

The aforementioned aim is achieved by a method and a system for automatically distributing asset pool shares among actors in a blockchain network, said blockchain network being configured to record transactions of N actors $a_1, a_i, a_N$ of a supply chain; the invention comprising:

a) defining for each actor $a_i$ a contribution parameter based on an amount of actor data inflow to the network;
b) defining for each actor an obtainment parameter based on an amount of actor data outflow out of the network;
c) receiving measured values of contribution parameters and measured values of obtainment parameters of all the network actors in a given time interval;
d) for each actor $a_i$, determining an actor contribution ratio $R^i_C$ based on a ratio between the own contribution parameter and a sum of all contribution parameters of all N actors;
e) for each actor $a_i$, determining an actor obtainment ratio $R^i_O$ based on a ratio between the own obtainment parameter and a sum of all contribution parameters of all N actors;
f) determining, for each actor $a_i$, a net asset balance $NB_i$ based on a product between an asset pool to be distributed among actors and the difference between the contribution ratio and the obtainment ratio;
g) at defined time points, distributing asset pool shares among the actors by transferring asset amounts directly between actor pairs through a plurality of corresponding blockchain transferal transactions in which, in at least one transaction, a first actor receives an amount of assets from a second actor having a higher net balance, where asset amounts are determined according to a predefined distribution rule based on the determined net-balances $NBi$, $NB_i$, $NB_N$ of the N actors.

In embodiments, the contribution parameter and the obtainment parameter may be obtained by measuring respectively volume of actor write data and volume of actor read data via a corresponding smartcontract API having as input the actor's network identifier and the given time interval.

In embodiments, the distributing of asset pool share may be performed by the same blockchain.

In embodiments, the distributing of asset pool share may be performed by an additional separate blockchain.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

In embodiments, the actor contribution parameter is calculated based on write data volumes by means of a contribution algorithm in a smart contract.

With embodiments, the actor contribution parameter provides an estimate of the actor contribution amount to the network resources.

In embodiments, the actor obtainment parameter is calculated based on read data volumes by means of an obtainment algorithm in a smart contract.

With embodiments, the actor obtainment parameter advantageously provides an estimate of the actor obtainment amount from the network resources.

Embodiments enable to automatically and adaptively determine the amount of assets to be assigned to each network actor.

Embodiments enable to automatically distribute the determined shares of assets directly among actors in a peer-to-peer and dynamic manner.

Embodiments enable to automatically assign to blockchain actors their own share of a token pool depending on their contribution to the network resources.

In embodiments, a blockchain may be used to manage a fixed subscription between each actor and the service provider.

In embodiments, a blockchain may be used to ensure that net contributors are compensated by net benefactors without requiring the service provider to act as a middle agent.

With embodiments, asymmetrical values of resource contributions delivered by the supply-chain actors of the blockchain networks are automatically compensated.

Embodiments enable assets to flow internally among network actors so that the network resource asymmetries are automatically regulated.

With embodiments, the blockchain network system is capable of automatically balancing itself, directly among network actors.

Embodiments enable a value flow mechanism to balance asymmetric contributions in blockchain-based platforms.

Embodiments enable to compensate blockchain network actors which are net contributors without requiring any involvement of the service provider.

Embodiments enable to implement an automatic asset distribution mechanism among blockchain actors via a blockchain ledger.

Embodiments enable building smart contracts of blockchain technologies capable of balancing asymmetric contributions of several different types of actors of a blockchain network.

Embodiments provide an efficient solution to the problem of balancing asymmetric contributions of the several actors of a blockchain network for tracking and tracing within a supply chain.

Embodiments provide a transparent compensation mechanism attracting contributor types of actors to participate to a blockchain network associated with a product lifecycle.

The invention will now be described in preferred but not exclusive embodiments with reference to the accompanying drawings, wherein:

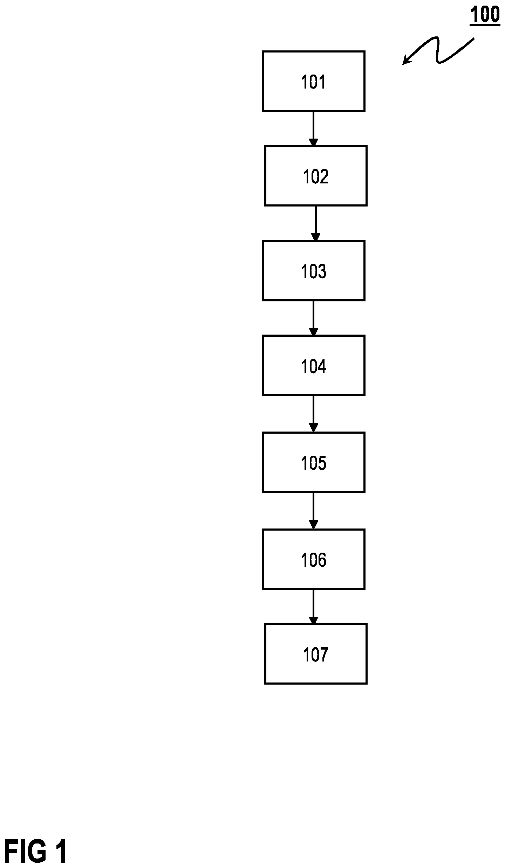

Figure 1 is a flowchart 100 schematically illustrating a method for automatically distributing asset pool share among actors in a blockchain network in accordance with disclosed embodiments.

A blockchain network configured to record transactions of N actors $a_1, a_i, a_N$ of a supply chain is provided.

At act 101, for each actor $a_i$, it is defined a contribution parameter based on an amount of actor data inflow to the network.

At act 102, for each actor $a_i$, it is defined an obtainment parameter based on an amount of actor data outflow out of the network.

At act 103, receiving measured values of contribution parameters and measured values of obtainment parameters of all the network actors, in a given time interval; whereby the given time interval refers to the time interval in which such parameters values are measured.

At act 104, for each actor $a_i$, an actor contribution ratio $R^i_C$ based on a ratio between the own contribution parameter and a sum of all contribution parameters of all N actors is determined.

At act 105, for each actor $a_i$, an actor obtainment ratio $R^i_O$ based on a ratio between the own obtainment parameter and a sum of all contribution parameters of all N actors is determined.

At act 106, for each actor $a_i$, a net asset balance $NB^i$ based on a product between an asset pool to be distributed among actors and the difference between the contribution ratio and the obtainment ratio is determined.

At act 107, at defined time points, asset pool shares are distributed among the actors by transferring asset amounts directly between actor pairs through a plurality of corresponding blockchain transferal transactions in which, in at least one transaction, a first actor receives an amount of assets from a second actor having a higher net balance, where asset amounts are determined according to a predefined distribution rule based on the determined net-balances $NBi, NB_i, NB_N$ of the N actors.

In embodiments, the contribution parameter and the obtainment parameter are measured by measuring respectively volume of actor write data and volume of actor read data via a corresponding smartcontract API having as input the actor's network identifier and the given time interval.

The contribution and obtainment parameters, being based on amount of data inflow and outflow to/from the networks, are characteristics of the blockchain ledger so that, in embodiments, a predefined smart contract can perform calculation by reading raw data from the primary blockchain ledger and writing the output transactions into a block on the blockchain ledger.

In embodiments, the transactions for distribution of the asset pool shares may be handled by the same blockchain, herein also called primary blockchain.

In other embodiments, the transactions for distribution of the asset pool shares may be handled by a second blockchain having most of the actors and of the primary blockchain. Advantageously, asset distribution transactions are recorded in a separate ledger than the ledger used for recording the transactions of the primary track and trace blockchain.

This optional configuration advantageously provides a separation of traceability and asset transactions.

A plurality of corresponding blockchain transferal transactions are recorded in a ledger acting as virtual balance sheet.

In embodiments, actor read/write data quantities may be used as value flow metrics of exchanged resource contribution to dynamically determine the amount of assets or tokens to be distributed among actors via corresponding blockchain smart contracts.

In embodiments, the latest agreed version of the asset distribution rules may be advantageously signed by each actor and stored immutably in the blockchain ledger. Advantageously, asset distribution rules are transparently exposed to each actor, so that each actor can regularly check its contribution/obtainment and its own net balances on corresponding block ledgers.

Examples of read/write data amounts to be measured in a time interval may include, but not limited by, amounts of exchanged data, amount of exchanged data packets, amount of read/write data blocks, amount of read/write operations, amount of read/write transactions, any mix thereof or any quantitative measure of data flow.

In embodiments, actors may agree on a predefined set of transaction types.

In embodiments, when the actors agree on a predefined set of transaction types (e.g. material movement, quality result, change of ownership), an agreed data-flow unit is set for each type.

This conveniently take into account that each transaction may have a same data volume, but may reflect different contribution efforts, for example IOT transaction contributions of a farmer vs transaction contributions of a retailer.

In embodiments, the total data for an actor is the product of the number of transactions and the corresponding unit values.

In embodiments, the total volume of read and written data by each actor may preferably be tracked by using a blockchain API ("Application Program Interface") knowing the actor named for each read and write. Advantageously, analytics applications like e.g. Mendix of Siemens Industry Software company, may enable data volume tracking of each user.

In embodiments, data flow amounts are measured by detecting inserts and queries to the blockchain containing a data flow by calculating their data flow by parsing it to the smart contract.

In other embodiments, where data flow is occurring in the cloud and not in the blockchain, the data flow is measured by making a connector to the exchanged data amount in the cloud.

In other embodiments, data stored off-chain may be linked to the blockchain with a single transaction that declares the total volume of the remote data ("VRD"). In these cases, the standard contribution calculation includes a factor representing VRD.

As used herein the terms "asset pool" denote an amount of assets to be distributed among actors in corresponding asset shares to be determined.

In embodiments, the asset pool size may be of predetermined on a given time interval. In other embodiments, the asset pool size may vary over time according to predefined criteria.

In embodiments, the asset pool size may dynamically set to depend on the level of inbalance between the actors on a given period of time.

In embodiments, the asset pool may be seen as being virtually replenished by the net benefactors and bein virtually emptied by the contributors at each specific time interval.

In embodiments, an intervening balance is held at zero, conveniently avoiding the need to perform any intermediate redistribution actions if the list of actors change during a time interval.

*Exemplary embodiment*

In an exemplary embodiment, assume that N actors $a_i$ of a supply chain participate to a blockchain network and that exchanged resource contributions are measured as data flows and assume that assets are tokens.

The exemplary embodiment for automatically distributing token pool shares among actors includes the following three main phases: 1) value flow measuring; 2) value balancing through token distribution; and, 3) token invoicing.

Actor value flows or resource flows are determined by measuring actor contribution parameters and actor obtainment parameters.

In this exemplary embodiment, value flow or resource flow are conveniently measured as data flow from/to the actors to/from the network system.

Accordingly, in embodiments, the contribution parameter of an actor in term of network system value or network resource may preferably be defined as volume of the data inflow from the actor into the blockchain network in a chosen time interval.

Accordingly, in embodiments, the obtainment parameter of an actor in term of network system value or network resource may preferably be defined as volume of data outflow from the blockchain network to the actor in the chosen time interval.

In embodiments, the net transaction volume is employed as a parameter indicating whether an actor is inserting or extracting value or resources to/from the system: data flowing into the blockchain network are seen as actor contribution to the value or resources of the system; data flowing out of the blockchain network are seen as delivering value or resources from the system.

Assume that the chosen time interval for value flow measuring is a month.

On a monthly basis, for each actor $a_i$, the write data volume $VOL_W^j$ and the read data volume $VOL_R^i$ are

measured.

The actor write/read data volume are measured for determining the actor net token balance to be distributed for value balancing purposes.

The actor net token balance are shares of a predefined token pool *AP* to be distributed among actors in a peer-to-peer manner.

For each actor, on a monthly basis, a write index $I_W{}^j$ is determined as a ratio between the actor monthly write volume and the sum of all N actor write volumes as shown in formula (f1) below. In other embodiments, weighted sums may conveniently be used.

$$(f1) \quad I_W{}^i = (VOL_W{}^i / \Sigma VOL_W{}^i)$$

For each actor, on a monthly basis, a read index $I_R{}^j$ is determined as a ratio between the actor monthly read volume and the sum of all N actor read volumes as shown in formula (f2) below. In other embodiments, weighted sums may conveniently be used.

$$(f2) \quad I_R{}^i = (VOL_R{}^i / \Sigma VOL_R{}^i)$$

For each actor, a net token balance $NB^i$ is determined as a product between the token pool AP to be distributed and the difference between the contribution index $I_W{}^j$ and the obtainment index $I_R{}^i$ as shown in formula (f3) below. In other embodiments, weighted sums may conveniently be used.

$$(f3) \quad NB^i = (I_W{}^i - I_R{}^i) * AP = I_W{}^i * AP - I_R{}^i * AP$$

In a simplified numerical example, assume that a blockchain network has the three following participants: actor A, actor B and actor C, respectively a brand owner, a farmer and a logistic provider. Assume a token pool value AP is predefined to be 30'000 tokens. In this example, the brand owner A extracts the most value from the system and has therefore agreed to redistribute a rebalance fund of 30,000 tokens.

During month M1, read/write data volumes $VOL_R{}^i / VOL_R{}^i$ of each actor are measured and recorded the first two rows of Table 1a.

Write/read indexes of all actors are then calculated with formulas (f1) and (f2) and stored in the third and fourth rows of Table 1a.

An actor has a "benefactor" status when its read index is larger than its write index, whilst an actor has a "contributor" status when its write index is larger than its read index.

Therefore, according to the values determined in Table 1a, actor A is a benefactor and actors B, C are contributors.

In the last row of Table 1a are shown the net token balances calculated with formula (f3): actor A needs to transfer 11.153 tokens, while actor B and C needs to receive respectively 7'624 and 3'529 Tokens.

Table 1a: net token balance calculations based on read/write volumes for month M1

|  | Actor A | Actor B | Actor C |
|---|---|---|---|
| Read Volume $VOL_R{}^i$ | 600 | 25 | 0 |
| Write Volume $VOL_W{}^j$ | 1000 | 500 | 200 |
| Read Index $IR^i$ | 96% | 4% | 0 |
| Write Index | 59% | 29% | 12% |
| $I_W{}^j$ |  |  |  |
| Net Token Balance $NB^i$ | -11'153 Tokens | 7'624 Tokens | 3'529 Tokens |

Based on the results of Table 1a, a corresponding balance sheet for month M1 is determined and shown in Table 1b below.

Table 1b is a result of one of a predefined distribution rule for transferring the determined asset amount between actor pairs, i.e. actor A transfers 11'153 tokens in corresponding shares of 7'624 and 3'529 to actor B and actor C respectively.

According to this embodiment of distribution rule, in case of three actors, if there is one benefactor and two contributors, the contributor transfers to each benefactor its due token balance and if there are two benefactors and one contributors, both contributors transfer their due net balance to the only contributor.

The skilled in the art is aware that other algorithm embodiments of distribution rule for asset transferals are possible with three or more actors, with several different combinations among participating actors and with implementations where amounts to be transferred are divided in smaller portions.

Table 1b: token transferal between actor pairs in month M1

| Transferral from A to B | 7'624 Tokens |
|---|---|
| Transferral from B to A | - |
| Transferral from A to C | 3'529 Tokens |
| Transferral from C to A | - |
| Transferral from B to C | - |

Table 1b shows a balance sheet of asset distribution among the three actors for month M1.

In another month M2, with different measured read/write volumes, the corresponding read/write index and net balances are determined and shown in Table 2a below.

Table 2a: actor net balance calculations based on read/write volumes for month M2

| | *Actor A* | *Actor B* | *Actor C* |
|---|---|---|---|
| *Read Volume $VOL_R{}^i$* | 600 | 500 | 0 |
| *Write Volume $VOL_W{}^j$* | 1000 | 500 | 200 |
| *Read Index $I_R{}^i$* | 55% | 45% | 0 |
| *Write Index $I_W{}^j$* | 59% | 29% | 12% |
| *Net Balance $NB^i$* | 1'283 Tokens | -4'813 Tokens | 3'530 Tokens |

Based on calculation of Table 2a, a corresponding balance sheet for month M2 is determined and shown in Table 2b below. Table 2b shows the token transferal amount by using the same token transferal algorithm embodiment as above, where then only benefactor, actor B, transfers its 4'813 tokens in corresponding shares of 1'283 and 3'530 to actor A and actor C respectively.

Table 2b: asset transferal between actor pairs in month M2

| Transferal from A to B | - |
|---|---|
| Transferal from B to A | 1'283 Tokens |
| Transferal from A to C | - |
| Transferal from C to A | - |
| Transferal from B to C | 3'530 Tokens |
| Transferal from C to B | - |

In embodiments, each actor may transfer on a monthly basis an agreed amount of tokens to the service provider, also known as monthly subscription. For example, actors A, B, C may transfer each month 20'000, 7'000, 7'000 tokens respectively.

Table 1c: token transferals for month M1

| | Actor A | Actor B | Actor C |
|---|---|---|---|
| Fixed monthly transferal to service provider | 20'000 Tokens | 7'000 Tokens | 7'000 Tokens |
| Net token balance | -11'153 Tokens | 7 ' 624 Tokens | 3'529 Tokens |
| Total monthly balance for month M1 | 31'153 Tokens | -624 Tokens | 3'471 Tokens |

Table 2c: token transferals for month M2

|  | Actor A | Actor B | Actor C |
| --- | --- | --- | --- |
| Monthly subscription | 20'000 Tokens | 7'000 Tokens | 7'000 Tokens |
| Net token balance | 1'283 Tokens | -4'813 Tokens | 3'530 Tokens |
| Total monthly balance | 18'717 Tokens | 11'813 Tokens | 3'471 Tokens |

In embodiments, the monthly net token balance transferals are recorded as virtual balance sheets in ledger blocks of the primary blockchain.

In other embodiments, the monthly net token balance transferals are recorded as virtual balance sheets in ledger blocks via smart-contract of a second blockchain.

In the first row of Tables 1c and 2c, it is shown the usually fixed monthly subscription transferred by each actor to the service provider.

In the second row of Tables 1c and 2c, it is shown the net token balance dynamically transferred direct between actor pairs in a peer-to-peer manner, for examples with the transferal algorithms of Table 1b and 1c.

In the third row of Tables 1c and 2c, it is shown the total monthly balance for each actor, which is the difference between the monthly subscription of the first row and the net token balance of the second row. For example, in month M1, actor B receives 624 tokens due to its contribution to the network resource.

Advantageously, embodiments enable to split between the regular fixed token transferals from the actors to the service provider and the monthly dynamic token transferals among actor pairs. Thus, the monthly subscriptions are independent from the peer-to-peer net balance transferals.

In fact, it is noted that in Tables 1c and 2c, the sum of total monthly balance is equal to the sum of monthly subscriptions, both are 34'000 tokens, and therefore the total revenue flowing from the actors to the service operator is not affected by the size of the agreed token pool.

In embodiments, the monthly subscription may advantageously be paid regularly by each actor to the service provider and the service provider is not involved in the net balance transferal occurring directly among actors.

In embodiments, each month, the smart contracts issue appropriate invoices directly between actors without involving the service provider, ensuring that the net contributors to the system are compensated.

Embodiments enable to employ blockchain platforms which support cryptographic tokens in order to automate the transferal of an automatically determined amount of tokens without reliance on any third party.

In embodiments, actors of a traceability consortium transfer in a peer-to-peer manner an amount of tokens determined in a dynamic manner.

The exemplary embodiment has been described with a number of actors equal to three and with time interval and points of time chosen on a monthly basis, the skilled in the art easily appreciates that embodiments may apply to any number of actors and with time intervals and/or points in time differently selected.

In embodiments, other time intervals may be used for determining the net balances, e.g. daily, weekly, and/or other points in time may be used for transferring the token amounts, e.g. monthly, bi-annually. For example, data volumes may be measured on a weekly basis (time interval) and then the transferals may be done bi-annually (points in time).

In embodiments, a system may comprise at least a processor and a memory and receives a request for a transaction or action for a product or an item. Said system is typically connected to other devices or systems in order to form a network for exchanging information with respect to the lifecycle of the product or the item.

Examples of transactions or actions include, but are not limited by, a movement of the product or the item from a supplier to a given retailer, an action applied to the product, like its mixture with another product, or its heating within a specific range of temperatures, a movement of an item, a transferal of a token etc.

In embodiments, a system to record transactions on a distributed network may comprise one or more of the following:

- a distributed network to which a proposed transaction is submitted;
- a device for cryptographically hashing the submitted transactions based on a cryptographic algorithm; and
- another device for verifying the hashed transaction; and
- one or more repository for recording the verified transaction.

In embodiments, a method may further conveniently include one or more of the following steps:

- recording a transaction on a distributed network;
- submitting a transaction to a distributed network;
- providing a cryptographic algorithm to hash a submitted transaction;

- cryptographically hashing a transaction based on the provided algorithm;
- verifying the hashed transactions;
- recording a verified transaction in one or more repository.

In embodiments, access to the blockchain network may be provided as software as a service ("Saas").

## Claims

1. A method for automatically distributing asset pool shares among actors in a blockchain network, said blockchain network being configured to record transactions of N actors of a supply chain; the method comprising the following steps:

a) defining (101) for each actor $a_i$ a contribution parameter based on an amount of actor data inflow to the network;
b) defining (102) for each actor an obtainment parameter based on an amount of actor data outflow out of the network;
c) receiving (103) measured values of contribution parameters and measured values of obtainment parameters of all the network actors in a given time interval;
d) for each actor $a_i$, determining (104) an actor contribution ratio $R^i_c$ based on a ratio between the own contribution parameter and a sum of all contribution parameters of all N actors;
e) for each actor $a_i$, determining (105) an actor obtainment ratio $R^i_o$ based on a ratio between the own obtainment parameter and a sum of all contribution parameters of all N actors;
f) determining (106), for each actor $a_i$, a net asset balance $NB^i$ based on a product between an asset pool to be distributed among actors and the difference between the contribution ratio and the obtainment ratio;
g) at defined time points, distributing (107) asset pool shares among the actors by transferring asset amounts directly between actor pairs through a plurality of corresponding blockchain transferal transactions in which, in at least one transaction, a first actor receives an amount of assets from a second actor having a higher net balance, where asset amounts are determined according to a predefined distribution rule based on the determined net-balances $NB^1$, $NB^i$, $NB^N$ of the N actors,

wherein the distributing of the asset pool share is performed by an additional separate blockchain of the blockchain network.

2. The method of claim 1, wherein in step c) the contribution parameter and the obtainment parameter are measured by measuring respectively volume of actor write data and volume of actor read data via a corresponding smartcontract API having as input the actor's network identifier and the given time interval.

3. The method of claim 1 or 2, wherein the distributing of asset pool share is performed by the same blockchain.

4. A data processing system for automatically distributing asset pool shares among actors in a blockchain network, comprising:
a processor, and an accessible memory, the data processing system particularly configured to execute the steps according to any of the claims 1 to 3.

## Patentansprüche

1. Verfahren zur automatischen Verteilung von Asset-Pool-Anteilen unter Akteuren in einem Blockchain-Netzwerk, wobei das Blockchain-Netzwerk dazu konfiguriert ist, Transaktionen von N Akteuren einer Lieferkette zu erfassen, wobei das Verfahren die folgenden Schritte umfasst:

a) Definieren (101) eines Beitragsparameters für jeden Akteur $a_i$ basierend auf einer Menge von Akteurdaten, die in das Netzwerk eingehen;
b) Definieren (102) eines Erlangungsparameters für jeden Akteur basierend auf einer Menge von Akteurdaten, die aus dem Netzwerk abgehen;
c) Empfangen (103) von Messwerten von Beitragsparametern und Messwerten von Erlangungsparametern aller Netzwerkakteure in einem gegebenen Zeitintervall;
d) für jeden Akteur $a_i$, Bestimmen (104) eines Akteurbeitragsverhältnisses $R^i_c$ basierend auf einem Verhältnis zwischen dem eigenen Beitragsparameter und einer Summe aller Beitragsparameter aller N Akteure;

e) für jeden Akteur $a_i$, Bestimmen (105) eines Akteurerlangungsverhältnisses $R^i_o$ basierend auf einem Verhältnis zwischen dem eigenen Erlangungsparameter und einer Summe aller Beitragsparameter aller N Akteure;

f) Bestimmen (106), für jeden Akteur $a_i$, einer Netto-Asset-Bilanz $NB^i$ basierend auf einem Produkt zwischen einem auf die Akteure aufzuteilenden Asset-Pool und der Differenz zwischen dem Beitragsverhältnis und dem Erlangungsverhältnis;

g) zu definierten Zeitpunkten, Verteilen (107) von Asset-Pool-Anteilen unter den Akteuren durch Übertragen von Asset-Mengen direkt zwischen Akteurpaaren durch eine Vielzahl von entsprechenden Blockchain-Transfertransaktionen, bei welchen ein erster Akteur bei mindestens einer Transaktion eine Menge von Assets von einem zweiten Akteur empfängt, der eine höhere Nettobilanz aufweist, wobei Asset-Mengen gemäß einer vordefinierten Verteilungsregel basierend auf den bestimmten Nettobilanzen $NB^1$, $NB^i$, $NB^N$ der N Akteure bestimmt werden,

wobei die Verteilung des Asset-Pool-Anteils durch eine zusätzliche separate Blockchain des Blockchain-Netzwerks durchgeführt wird.

2. Verfahren nach Anspruch 1, wobei bei Schritt c) der Beitragsparameter und der Erlangungsparameter gemessen werden, indem jeweils das Volumen von Akteur-Schreibdaten und das Volumen von Akteur-Lesedaten über eine entsprechende SmartContract-API gemessen werden, welche die Netzkennung des Akteurs und das gegebene Zeitintervall als Eingabe aufweist.

3. Verfahren nach Anspruch 1 oder 2, wobei die Verteilung der Asset-Pool-Aktie durch dieselbe Blockchain durchgeführt wird.

4. Datenverarbeitungssystem zur automatischen Verteilung von Asset-Pool-Anteilen unter Akteuren in einem Blockchain-Netzwerk, umfassend:
einen Prozessor und einen zugänglichen Speicher, wobei das Datenverarbeitungssystem speziell dazu konfiguriert ist, die Schritte nach einem der Ansprüche 1 bis 3 auszuführen.

## Revendications

1. Procédé de distribution automatique d'actions de groupe d'actifs parmi les acteurs d'un réseau de chaîne de blocs, ledit réseau de chaîne de blocs étant configuré pour enregistrer des transactions de N acteurs d'une chaîne d'approvisionnement ; le procédé comprenant les étapes suivantes :

a) définir (101) pour chaque acteur $a_i$ un paramètre de contribution basé sur une quantité de données d'acteur entrant dans le réseau ;

b) définir (102) pour chaque acteur un paramètre d'obtention basé sur une quantité de données d'acteur sortant du réseau ;

c) recevoir (103) des valeurs mesurées de paramètres de contribution et des valeurs mesurées de paramètres d'obtention de tous les acteurs du réseau dans un intervalle de temps donné ;

d) pour chaque acteur $a_i$, déterminer (104) un rapport de contribution d'acteur $R^i_c$ basé sur un rapport entre le paramètre de contribution propre et une somme de tous les paramètres de contribution de tous les N acteurs ;

e) pour chaque acteur $a_i$, déterminer (105) un rapport d'obtention d'acteur $R^i_0$ basé sur un rapport entre le paramètre d'obtention propre et une somme de tous les paramètres de contribution de tous les N acteurs ;

f) déterminer (106), pour chaque acteur $a_i$, un solde d'actifs net $NB^i$ basé sur un produit entre un groupe d'actifs à distribuer parmi les acteurs et la différence entre le rapport de contribution et le rapport d'obtention ;

g) à des moments définis, distribuer (107) des actions de groupe d'actifs parmi les acteurs en transférant des montants d'actifs directement entre des paires d'acteurs par le biais d'une pluralité de transactions de transfert de chaîne de blocs correspondantes dans lesquelles, dans au moins une transaction, un premier acteur reçoit un montant d'actifs d'un second acteur ayant un solde net plus élevé, où les montants d'actifs sont déterminés selon une règle de distribution prédéfinie basée sur les soldes nets déterminés $NB^1$, $NB^i$, $NB^N$ des N acteurs,

dans lequel la distribution de l'action de groupe d'actifs est effectuée par une chaîne de blocs séparée supplémentaire du réseau de chaîne de blocs.

2. Procédé selon la revendication 1, dans lequel à l'étape c) le paramètre de contribution et le paramètre d'obtention sont

## EP 3 979 166 B1

mesurés en mesurant respectivement le volume de données d'écriture d'acteur et le volume de données de lecture d'acteur via une API de contrat intelligent correspondante ayant comme entrée l'identifiant de réseau de l'acteur et l'intervalle de temps donné.

3. Procédé selon la revendication 1 ou 2, dans lequel la distribution de l'action de groupe d'actifs est effectuée par la même chaîne de blocs.

4. Système de traitement de données pour distribuer automatiquement des actions de groupe d'actifs parmi les acteurs d'un réseau de chaîne de blocs, comprenant :
un processeur et une mémoire accessible, le système de traitement de données étant particulièrement configuré pour exécuter les étapes selon l'une des revendications 1 à 3.

100

```
┌─────────┐
│   101   │
└─────────┘
     │
     ▼
┌─────────┐
│   102   │
└─────────┘
     │
     ▼
┌─────────┐
│   103   │
└─────────┘
     │
     ▼
┌─────────┐
│   104   │
└─────────┘
     │
     ▼
┌─────────┐
│   105   │
└─────────┘
     │
     ▼
┌─────────┐
│   106   │
└─────────┘
     │
     ▼
┌─────────┐
│   107   │
└─────────┘
```

FIG 1

**EP 3 979 166 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3564881 A1